Europäisches Patentamt

(19) European Patent Office

Office européen des brevets

(11) Veröffentlichungsnummer: **0 002 713**
**B1**

(12) **EUROPÄISCHE PATENTSCHRIFT**

(45) Veröffentlichungstag der Patentschrift:
30.12.81

(51) Int. Cl.³: **G 05 D 7/01, F 16 K 15/03**

(21) Anmeldenummer: **78101636.5**

(22) Anmeldetag: **09.12.78**

(54) Regler für die Strömung eines gasförmigen Mediums in einer Leitung.

(30) Priorität: **27.12.77 DE 2758352**

(43) Veröffentlichungstag der Anmeldung:
**11.07.79 Patentblatt 79/14**

(45) Bekanntmachung des Hinweises auf die Patenterteilung:
**30.12.81 Patentblatt 81/52**

(84) Benannte Vertragsstaaten:
**CH DE FR GB NL SE**

(56) Entgegenhaltungen:
**DE-A-1 604 168**
**DE-A-2 718 775**
**DE-B-1 153 955**
**DE-B-2 333 694**
**DE-C-503 294**

(73) Patentinhaber: **SIEGWART Emil,**
**Michael-Blatter-Strasse 6, D-6603 Sulzbach-Neuweiler**
**(DE)**

(72) Erfinder: **SIEGWART Emil, Michael-Blatter-Strasse 6,**
**D-6603 Sulzbach-Neuweiler (DE)**

(74) Vertreter: **Bernhardt, Winfrid, Dr.-Ing.,**
**Kobenhüttenweg 43, D-6600 Saarbrücken (DE)**

ACTORUM AG.

Regler für die Strömung eines gasförmigen Mediums in einer Leitung.

Die Erfindung betrifft einen Regler für die Strömung eines gasförmigen Mediums in einer Leitung, bei dem der freie Leitungsquerschnitt durch eine Klappe veränderbar ist, insbesondere eine Klappe, die auf einer nahe einer Querschnittsmittelachse angeordneten Welle durch die Strömung gegen eine Federkraft im Schliessinne verdrehbar ist und nahe der Welle gewinkelt ist, wobei ihr einer Schenkel in Öffnungsstellung im wesentlichen parallel zur Leitungsachse nach hinten und in Schliessstellung schräg nach hinten und ihr anderer Schenkel in Öffnungsstellung schräg nach vorne und in Schliessstellung im wesentlichen rechtwinklig zur Leitungsachse ausgerichtet ist.

Ein solcher Regler mit der insbesondere erwähnten Klappe ist aus der DE-B Nr. 3444794 bekannt. Er zeichnet sich durch Arbeitsfähigkeit in einem grossen Regelbereich bis hinunter zu sehr niedrigen Vordrücken sowie durch eine Reihe weiterer Vorzüge aus.

Aus verschiedenen Gründen kann eine gewisse Baugrösse des Reglers nicht unterschritten werden.

Das derzeitige Mindestmass liegt bei etwa 80 mm Durchmesser eines runden Leitungsquerschnitts.

Die damit gegebenen Möglichkeiten reichen in speziellen Fällen mit besonders niedrigen Strömungsmengen nicht aus. Für die Einzelbelüftung eines Arbeitsplatzes an einem Schreibtisch zum Beispiel wird eine Strömungsmenge benötigt, die auf einem Querschnitt von 80 mm Durchmesser zu langsam und dementsprechend mit zu geringem Vordruck am Regler strömen würde, um die Klappe, selbst bei schwächster Bemessung der an ihr angreifenden Federkraft, funktionieren zu lassen.

Der Erfindung liegt die Aufgabe zugrunde, einen Regler auch für kleinere bis hin zu besonders kleinen Strömungsmengen zu schaffen, der ausserdem einfach und einfach montierbar ist.

Die Erfindung geht zu diesem Zweck aus von einem Regler der eingangs bezeichneten Art und sieht vor, dass der Regler eine in die Leitung einschiebbare, selbständige Baueinheit aus zwei über Abstandhalter starr verbundenen, gegenüberliegende Abschnitte des Leitungsquerschnitts, einnehmenden Einsatzteilen ist, die den freien Leitungsquerschnitt mit zwei im wesentlichen parallelen Flächen begrenzen, in deren, im übrigen durch die Leitungswandung, begrenztem, Zwischenraum die Klappe angeordnet ist.

Der in diesem Regler durch die Einsatzteile verkleinerte freie Leitungsquerschnitt erhöht die Strömungsgeschwindigkeit. Bei der höheren Geschwindigkeit hat dieselbe Menge des strömenden Mediums einen grösseren Impuls und eine im Quadrat grössere kinetische Energie. Da durch diese die von der Strömung auf die Klappe ausgeübte Kraft bestimmt wird, wird also die die Klappe verdrehende Kraft vergrössert, und damit die Regelfähigkeit der Klappe auf niedrigere Strömungsmengen erweitert. Das ist aber nur ein Aspekt des neuen Reglers.

Die vorgesehene Baueinheit ist zugleich in anderen Beziehungen sehr vorteilhaft und brauchbar.

Ihr Aufwand beschränkt sich auf das Mindestmass des unbedingt Notwendigen. Um den kleineren freien Leitungsquerschnitt zu schaffen, wird keine neue Leitung kleineren Querschnitts eingerichtet, sondern unter Loslösung von der vorhandenen Querschnittsform die vorhandene Leitungswandung weiterhin verwendet und nur zum Teil durch neue Teile, die Einsatzteile, der neue freie Leitungsquerschnitt geschaffen. Das bedeutet zugleich strömungstechnisch den geringstmöglichen Eingriff. Die Strömung kann im Bereich der Leitungswandung, der, je nach den Verhältnissen, noch beträchtlich sein kann, ganz ungestört weiterfliessen; im übrigen wird sie durch die genannten parallelen, vorzugsweise ebenen, Flächen der Einsatzteile so wenig wie möglich beeinträchtigt.

In einer Fertigung wird man je nach der zu regelnden Strömungsmenge Ausführungen mit verschiedener Höhe der Einsatzteile, d.h. mit verschiedener Höhe und gleicher Breite der Klappe vorsehen.

Schliesslich hat der Regler technisch-wirtschaftliche Vorteile von einem in der Praxis bedeutsamen Ausmass. Er kann in Rohrleitungen von beliebiger Wandstärke und aus beliebigem Werkstoff, z.B. Asbestzement, eingesetzt werden, und er kann leicht herausnehmbar an den Enden einer Rohrleitung eingesetzt werden, die die Belüftungs- und Entlüftungsöffnungen eines Arbeitsplatzes oder eines Raumes bilden, z.B. einer Toilette, eines Badezimmers oder einer Küche. Letzteres vereinfacht die erste Montage ebenso wie spätere Wartungen; zur weiteren Vereinfachung kann die Baueinheit sogar mit einem Abschlussgitter, -ring o. dgl. kombiniert werden und als einfache Steckbefestigung dafür dienen.

Vorzugsweise sind die Einsatzteile ebene Scheiben, zweckmässig aus Blech, die vorne und hinten einfach Abbiegungen aufweisen, um damit die genannten gegenüberliegenden Abschnitte des Leitungsquerschnitts abzuschliessen.

Als weitere vorteilhafte Ausgestaltung der Erfindung wird vorgeschlagen, dass der Zwischenraum zwischen den beiden Einsatzteilen sich quer zur Klappenwelle erstreckt und die Klappenwelle an den Aussenseiten der genannten Flächen gelagert ist.

Durch diese Massnahme wird zusätzlich zu der Erhöhung der auf die Klappe wirkenden Kraft der Hebelarm verlängert, mit dem die Kraft angreift, also das Drehmoment vergrössert. Die Strömung in den äussersten Abschnitten des Mittelfelds wirkt dabei erst auf die schon weiter zur Schliessstellung hin verdrehte Klappe, die Strömung in den weiter innen liegenden, achsnäheren Abschnitten wirkt bei jeder Klappenstellung, auch der Öffnungs- bzw. Ausgangsstellung.

Mit der Anordnung der Lager im toten Raum hinter den genannten Flächen wird kein Platz weggenommen.

Die Zeichnung gibt ein Ausführungsbeispiel der Erfindung wieder.

Fig. 1 zeigt einen Strömungsregler in einer einem axialen Längsschnitt nahekommenden perspektivischen Darstellung, teilweise weggebrochen.

Fig. 2 zeigt den Strömungsregler nach Fig. 3 teilweise in Ansicht von oben, teilweise im Querschnitt.

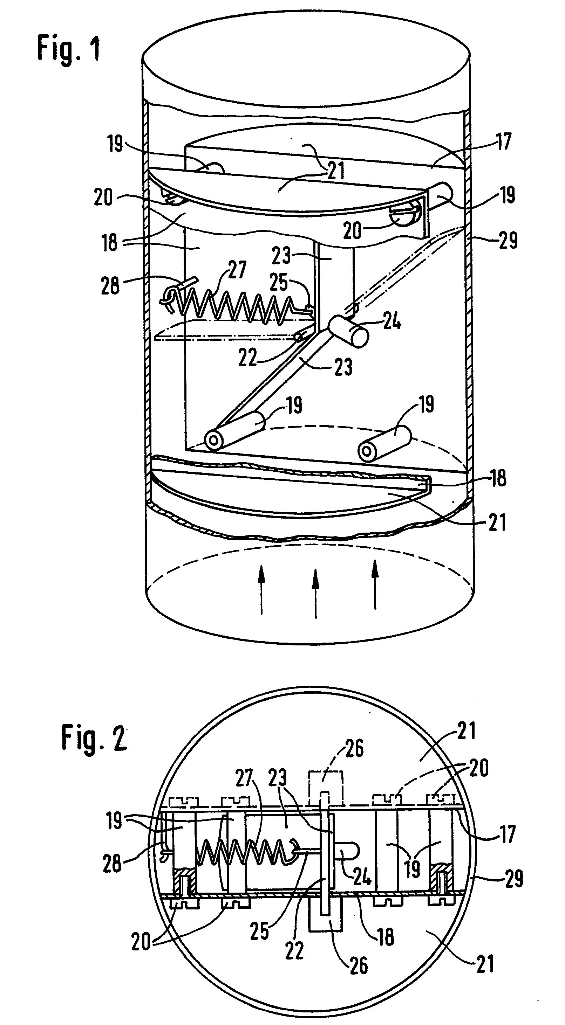

Der Strömungsregler nach Fig. 1 und 2 weist statt eines eigenen Gehäuses ein in eine Leitung 29 von rundem Querschnitt einschiebbares Rahmengestell 17 auf. Es besteht aus zwei gleichen Blechscheiben 18, die durch vier mit Innengewinden versehene Bolzen 19 und in die Innengewinde greifende Kopfschrauben 20 parallel zueinander auf Abstand gehalten und starr miteinander verbunden sind. Am in Strömungsrichtung vorderen und hinteren Ende sind die Blechscheiden 18 jeweils nach aussen abgewinkelt; die Abwinkelungen bilden Blenden 21, die die beiden an den Aussenseiten der Blechscheiben 18 liegenden Abschnitte des Leitungsquerschnitts ausfüllen.

In dem Rahmengestell 17 ist in etwa 3% Abstand von der Querschnittsmittelachse, bezogen auf dem Durchmesser der Leitung, eine Welle 22 angeordnet, die eine in ihrem Längsschnitt mittig um etwa 30° gewinkelte Klappe 23 trägt, deren Schwerelinie durch ein Gegengewicht 24 an die entlang der Knickung der Klappe verlaufende Welle gelegt ist und an der auf der Mitte der Welle 22 ein Hebelarm 25 sitzt.

Die Welle 22 ist in an der Aussenseite der Blechscheiben 18 angebrachten Lagern 26 gelagert.

An dem Hebelarm 25 greift eine Schraubenfeder 27 an, die in Richtung von der Leitungswandung her durch einen auf der einen Blechscheibe 18 nahe dem Rand starr befestigten Stab 28 gehalten ist.

In der in Fig. 1 in vollen Linien gezeichneten Öffnungsstellung der Klappe 23 ist der eine Schenkel der Klappe parallel zur Leitungsachse nach hinten und der andere Schenkel schräg nach vorne ausgerichtet. Der vordere Klappenschenkel liegt an einem der Bolzen 19 an. Zu diesem Zweck sitzen an diesem Ende der Scheiden 18 die Bolzen 20 weiter in der Mitte, während sie am anderen Ende 19 nahe den Ecken der Blechscheiben 18 angeordnet sind.

In der in gestrichelten Linien gezeichneten Schliessstellung der Klappe 23 fällt der vordere Schenkel in eine Querschnittsebene der Leitung und der hintere Schenkel steht schräg nach hinten. Der hintere Klappenschenkel stösst an die Wandung der Leitung 29 an, in die der Regler eingeschoben ist und in der er durch seine Anlage mit den Rändern der vier Blenden 21 einen sicheren Sitz hat. Statt durch die Wandung der Leitung 29 könnte die Schliessstellung der Klappe auch durch einen am Rahmengestell 17 selbst vorgesehenen Anschlag bestimmt sein; z.B. könnte der Stab 28 so eingerichtet sein, dass er den Weg des vorderen Klappenschenkels begrenzt.

Durch die beiden vorderen Blenden 21 ist der freie Leitungsquerschnitt auf das zwischen diesen liegende, quer zur Klappenwelle sich erstreckende Mittelfeld beschränkt, wobei sich diese Beschränkung durch die beiden Blechscheiben 18 bis über die Klappe hinaus fortsetzt.

Die Klappe 23 regelt bei verschiedenen Vordrücken die gleiche Strömungsmenge ein, indem sie unter der Einwirkung der auf sie treffenden Strömung gegen die Kraft der Schraubenfeder 27 den Leitungsquerschnitt zwischen den Blechscheiben 18 mehr oder weniger weit verschliesst.

**Patentansprüche**

1. Regler für die Strömung eines gasförmigen Mediums in einer Leitung, bei dem der freie Leitungsquerschnitt durch eine Klappe (23) veränderbar ist, insbesondere eine Klappe, die auf einer nahe einer Querschnittsmittelachse angeordneten Welle (22) durch die Strömung gegen eine Federkraft im Schliessinne verdrehbar ist und nahe der Welle gewinkelt ist, wobei ihr einer Schenkel in Öffnungsstellung im wesentlichen parallel zur Leitungsachse nach hinten und ihr anderer Schenkel in Öffnungsstellung schräg nach vorne und in Schliessstellung im wesentlichen rechtwinklig zur Leitungsachse ausgerichtet ist, dadurch gekennzeichnet, dass der Regler eine in die Leitung (29) einschiebbare, selbständige Baueinheit (17) aus zwei über Abstandhalter (19, 20) starr verbundenen, gegenüberliegende Abschnitte des Leitungsquerschnitts, einnehmenden Einsatzteilen (18, 21) ist, die den freien Leitungsquerschnitt mit zwei im wesentlichen parallelen Flächen (18) begrenzen, in deren, im übrigen durch die Leitungswandung (29), begrenztem Zwischenraum die Klappe (23) angeordnet ist.

2. Regler nach Anspruch 1, dadurch gekennzeichnet, dass die Einsatzteile (18, 21), vorzugsweise ebene, Scheiben (18) sind, die vorne und hinten Abbiegungen (20) nach aussen aufweisen, die die genannten gegenüberliegenden Abschnitte des Leitungsquerschnitts abschliessen.

3. Regler nach einem der beiden Ansprüche 1 oder 2, dadurch gekennzeichnet, dass der Zwischenraum zwischen den Einsatzteilen (18, 21) sich quer zur Klappenwelle (22) erstreckt und die Klappenwelle an den Aussenseiten der genannten Flächen (18) gelagert (26) ist.

**Claims**

1. Regulator for the flow of a gasous medium in a conduit wherein the effective cross-sectional area is variable by a flap (23), particularly a flap which is turnable by the flow in a closing direction against a spring force on a shaft (22) which is disposed close to a central axis of the cross section, which has a bend in the proximity of the shaft, one leg of which extends rearwardly and is parallel to the axis of the conduit in the open position, and the other leg of which is inclined forwardly in the open position and is disposed substantially at right angles to the axis of the conduit in the closed position, characterised in that the regulator is an independent structural unit (17) insertable into the conduit (29) and consisting of two inserts (18, 21) which are rigidly connected to each other by distancing elements (19, 20) and occupy positions of the cross section of the conduit which are disposed opposite each other, and which flank the effective cross-sectional area of the conduit with two substantially parallel surfaces (18), the flap (23) being located in the space which is disposed between such surfaces and is further bounded by the wall (29) of the conduit.

2. Regulator according to claim 1, characterised in that the inserts (18, 21) are preferably flat discs (18) which comprise outwardly extending bent portions (20) provided in front and at the rear and closing the aforesaid portions of the cross section of the conduit which are located opposite each other.

3. Regulator according to claim 1 or 2, characterised in that the space between the inserts (18, 21) extends transversely of the shaft (22) for the flap and in that the shaft for the flap is journaled at (26) the outer sides of the aforesaid surfaces (18).

**Revendications**

1. Régulateur d'écoulement d'un fluide gazeux dans une conduite, dans lequel la section libre de la conduite peut être modifiée par un volet (23), notamment un volet qui, contre la force d'un ressort, peut pivoter dans le sens de la fermeture sur un arbre (22) disposé près de l'axe médian de cette section, ce volet étant coudé près de cet arbre, une aile de ce volet étant, en position d'ouverture, sensiblement parallèle vers l'arrière à l'axe de la conduite, son autre aile étant, en position d'ouverture, dirigée en biais vers l'avant et, en position de fermeture, sensiblement perpendiculaire à l'axe de la conduite, caractérisé en ce que le régulateur est un ensemble de montage indépendant (17) qui peut être introduit dans la conduite (29), composé de deux flasques (18, 21) reliés rigidement l'un à l'autre par l'intermédiaire d'entretoises (19, 20) et occupant des segments de la section de la conduite situés à l'opposé l'un de l'autre, qui délimitent la section libre de la conduite par deux surfaces (18) sensiblement parallèles dans l'espace intermédiaire desquelles, délimité pour le reste par la paroi (29) de la conduite, est disposé le volet (23).

2. Régulateur selon la revendication 1, caractérisé en ce que les flasques (18, 21) sont des plaques de préférence planes (18) qui, à l'avant et à l'arrière, présentent des rabats (21) dirigés vers l'extérieur qui ferment lesdits segments opposés de la section de la conduite.

3. Régulateur selon la revendication 1 ou 2, caractérisé en ce que l'espace intermédiaire entre les flasques (18, 21) s'étend en travers de l'arbre (22) du volet, cet arbre étant monté dans des paliers (26) sur les faces extérieures desdites plaques (18).

Fig. 1

Fig. 2